# FASCICULE DE BREVET EUROPEEN

(11) **EP 1 447 867 B1**
(45) Date de publication et mention de la délivrance du brevet: **28.09.2005**
(21) Numéro de dépôt: 04290342.7
(22) Date de dépôt: 10.02.2004
(51) Int. Cl.: H01M 4/62, H01M 4/32

(54) **Electrode non-frittée pour générateur électrochimique à électrolyte alcalin**
Nichtgesinterte Elektrode für Batterie mit alkalischem Elektrolyt
Non-sintered electrode for battery with alkaline electrolyte

(30) Priorité: 11.02.2003 FR 0301586
(43) Date de publication de la demande: 18.08.2004
(73) Titulaire: ALCATEL, 75008 Paris (FR)
(72) Inventeur: Bernard, Patrick, 33000 Bordeaux (FR); Goubault, Lionel, 33700 Merignac (FR)
(74) Mandataire: Cabinet Hirsch

(56) Documents cités:
- US-A- 5 525 444
- DATABASE WPI Section Ch, Week 200111 Derwent Publications Ltd., London, GB; Class A85, AN 2001-095089 XP002266667 & JP 2000 294230 A (GS MERCOTECH KK), 20 octobre 2000 (2000-10-20)
- PATENT ABSTRACTS OF JAPAN vol. 1997, no. 02, 28 février 1997 (1997-02-28) & JP 08 264175 A (SHIN KOBE ELECTRIC MACH CO LTD), 11 octobre 1996 (1996-10-11)

## Description

La présente invention concerne une électrode non-frittée telle que celle qui est utilisée dans les générateurs électrochimiques secondaires à électrolyte alcalin, comme par exemple les accumulateurs nickel-cadmium, nickel-fer, nickel-hydrogène, nickel-métal hydrurable. Elle s'étend en outre au générateur contenant une telle électrode.

Il existe plusieurs types d'électrode, notamment les électrodes frittées et les électrodes non-frittées, dite aussi empâtées ou plastifiées. Les électrodes les plus largement employées aujourd'hui sont de type non-fritté. Par rapport aux autres électrodes, une électrode non-frittée contient une plus grande quantité de matière active, sa capacité volumique est donc augmentée et son coût de fabrication est plus faible.

Une électrode non-frittée se compose d'un support servant de collecteur de courant sur lequel on enduit une pâte contenant la matière active et un liant, auquel on ajoute le plus souvent un matériau conducteur. Elle est habituellement réalisée par dépôt de la pâte dans un support conducteur tridimensionnel poreux comme un feutre ou une mousse, métallique ou en carbone. Pour des raisons de coût, on se dirige maintenant vers l'utilisation de support conducteur bidimensionnel. Or les liants connus et employés pour réaliser une électrode à support tridimensionnel se révèlent inadaptés à un support bidimensionnel.

La demande de brevet EP-0 750 358 décrit par exemple une électrode de nickel non-frittée dont le support est une plaque métallique ondulée où on a formé des dents pour accrocher une couche microrugueuse. Sur cette couche, on dépose une pâte comprenant de la carboxyméthylcellulose (CMC) et un copolymère styrène/butadiène (SBR). Dans ce cas il a été nécessaire de faire appel à un moyen autre que le liant pour assurer la tenue mécanique de l'électrode.

On connaît aussi la demande de brevet allemand DE-19 709 107 qui décrit un accumulateur nickel-hydrure métallique comprenant une électrode formée d'une pâte appliquée sur un substrat. La pâte contient un liant acrylate ayant des groupes esters de 6 à 15 carbones.

La présente invention a pour but de proposer une électrode dont la tenue mécanique et la capacité massique sont au moins équivalents à ceux d'une électrode ayant un support collecteur de courant tridimensionnel.

La présente invention a pour objet un générateur électrochimique secondaire à électrolyte alcalin comprenant une électrode non-frittée comportant un support conducteur bidimensionnel recouvert d'une couche contenant une matière électrochimiquement active et un liant, caractérisé en ce que ledit liant est un mélange d'un composé cellulosique et d'un copolymère styrène-acrylate de formule générale :

[(-CH₂-CHC₆H₅-)ₚ (-CH₂CHCOOR-)_{q}]ₓ.

Le copolymère styrène-acrylate est une combinaison de motifs élémentaires styrène (-CH₂-CHC₆H₅-) d'une part, et de motifs élémentaires ester acrylique ou acrylate (-CH₂CHCOOR-) d'autre part.

De manière préférentielle, la proportion du copolymère styrène-acrylate est inférieur à 4% en poids de la couche active. Lorsque la proportion de copolymère styrène-acrylate est égale ou supérieure à 4% en poids de la couche active, la capacité massique de l'électrode diminue sensiblement. En effet, une augmentation de la proportion de liant dans la couche active entraîne une diminution de la quantité de matière électrochimiquement active, ce qui provoque une chute des performances.

Avantageusement la proportion de copolymère styrène-acrylate est comprise entre 0,15% et 3% en poids de la couche active. Une diminution de la quantité de liant à une valeur inférieure à 0,15% en poids de la couche active n'abaisse pas la capacité mais la tenue mécanique de l'électrode est dégradée.

Le composé cellullosique peut être notamment choisi parmi la méthylcellulose (MC), la carboxyméthylcellulose (CMC), l'hydroxypropylméthylcellulose (HPMC), l'hydroxypropylcellulose(HPC) et l'hydroxyéthylcellulose (HEC). De préférence encore on utilise le carboxyméthylcellulose (CMC). La proportion du composé cellulosique est de préférence comprise entre 0.1 et 1% en poids de la couche active.

Selon un mode de réalisation particulier de la présente invention, la matière électrochimiquement active comprend un hydroxyde de nickel. De préférence cet hydroxyde a une forme sphéroïdale et possède une granulométrie comprise entre 7µm et 20µm.

Il est bien entendu que le terme "matière électrochimiquement active contenant de l'hydroxyde de nickel" utilisé dans la présente demande peut signifier un hydroxyde de nickel, un hydroxyde contenant principalement du nickel, mais également un hydroxyde de nickel contenant au moins un hydroxyde syncristallisé d'un élément choisi parmi le zinc, le cadmium et le magnésium et au moins un hydroxyde syncristallisé d'un élément choisi parmi le cobalt, le manganèse, l'aluminium, l'yttrium, le calcium, le strontium, le zirconium, le cuivre. Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

La matière active peut être recouverte par un revêtement à base d'oxyde ou d'hydroxyde de cobalt contenant éventuellement d'autres éléments tels que le nickel, le zinc, l'aluminium et/ou le manganèse, ou bien encore par un revêtement métallique poreux, par exemple de nickel.

L'hydroxyde de nickel est un composé peu conducteur qui nécessite l'adjonction d'un matériau conducteur permettant une bonne percolation électrique. La couche active contient en outre un matériau conducteur choisi parmi des particules conductrices, des fibres conductrices et leurs mélanges. Les particules conductrices peuvent être choisies parmi des particules de carbone, des particules de métal, comme du nickel par exemple, ou de la poudre d'un composé d'un métal de transition comme par exemple Co, CoO, Co(OH)₂, l'oxyde mixte de lithium et de cobalt LiCoO₂ et un oxyde de cobalt conducteur de valence supérieure à 2. Lesdites fibres conductrices sont choisies parmi des fibres de carbone, des fibres de métal ou des fibres recouvertes de métal, comme le nickel par exemple.

De préférence, la couche active contient un composé conducteur constitué essentiellement d'un composé du cobalt, de préférence du cobalt métal Co, de l'oxyde de cobalt CoO, de l'hydroxyde de cobalt Co(OH)₂, de l'oxyde mixte de lithium et de cobalt LiCoO₂ ou un oxyde de cobalt conducteur de valence supérieure à 2.

Avantageusement, la proportion du matériau conducteur dans la couche active est comprise entre 3% et 15% en poids de la couche. Au-delà de cette valeur, la capacité volumique de l'électrode diminue du fait de la diminution proportionnelle de la quantité de matière active.

La couche active peut contenir en outre au moins un autre composé choisi parmi les composés du zinc comme ZnO ou Zn(OH)₂, de l'yttrium comme Y₂O₃ ou Y(OH)₃, de l'ytterbium comme Yb₂O₃ ou Yb(OH)₃, et du calcium comme CaO, Ca(OH)₂ ou CaF₂. Ce composé est habituellement ajouté sous forme pulvérulente.

Selon une première variante, la couche contient en outre une poudre d'un composé de l'yttrium, de préférence de l'oxyde d'yttrium Y₂O₃ ou de l'hydroxyde d'yttrium Y(OH)₃.

Selon une première variante, la couche contient en outre une poudre d'un composé de l'ytterbium, de préférence de l'oxyde d'ytterbium Yb₂O₃ ou de l'hydroxyde d'ytterbium Yb(OH)₃.

Avantageusement la couche active contient en outre des fibres polymères, comme par exemple des fibres de polypropylène. De préférence ces fibres ont une longueur de 0,1 mm à 1,5 mm et un diamètre est compris entre 10µm et 30µm. Ces fibres sont destinées à renforcer la tenue mécanique de l'électrode.

On entend par support bidimensionnel un support plan sur lequel on vient déposer une pâte qui, une fois séchée, formera la couche active. Les propriétés du liant sont donc essentielles pour maintenir la couche active sur le support, notamment en cas de spiralage de l'électrode.

Ledit support conducteur bidimensionnel peut être un feuillard plein ou perforé, un métal déployé, une grille ou un tissu. Il est par exemple un feuillard en acier nickelé d'épaisseur comprise entre 10⁻²mm et 10⁻¹mm, de masse surfacique comprise entre 0.3g/dm² et 6g/dm², avec un taux de jour compris entre 0% et 80%, le diamètre des trous étant compris entre 0,1mm et 3mm.

La présente invention a aussi pour objet un générateur électrochimique secondaire comportant une électrode positive, une électrode négative à hydrure métallique et un électrolyte alcalin aqueux. L'électrode négative peut comprendre notamment une matière active choisie entre le cadmium et un alliage hydrurable.

D'autres caractéristiques et avantages de la présente invention apparaîtront au cours de la description suivante de modes de réalisation donnés à titre illustratif, mais nullement limitatif.

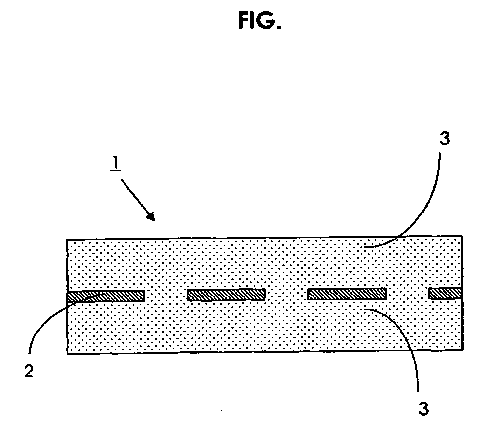

La figure unique représente une vue en coupe d'une électrode selon l'invention. L'électrode 1 est composée d'un support conducteur 2 de forme plane qui assure la fonction de collecteur de courant. Le support 2 est recouvert d'une couche électrochimiquement active 3 qui contient la matière électrochimiquement active et un liant.

### EXEMPLE 1

On réalise une première électrode (I) selon l'invention dont la couche active a pour composition pondérale :

| | |
|---|---|
| Matière électrochimiquement active à base de Ni(OH)₂ | 87,2% |
| Matériau conducteur : poudre de Co(OH)₂ | 10% |
| Copolymère styrène-acrylate | 2% |
| Composé cellulosique : CMC | 0,3% |
| Y₂O₃ | 0,5% |

La matière électrochimiquement active pulvérulente est constituée d'un hydroxyde à base de nickel contenant les additifs suivant : cobalt et zinc. La viscosité de la pâte est ajustée avec de l'eau. La pâte est déposée de manière homogène simultanément sur les deux faces d'un support métallique bidimensionnel qui est un feuillard d'acier nickelé perforé d'épaisseur 50µm. L'ensemble est ensuite séché afin d'en éliminer l'eau, puis laminé à l'épaisseur désirée et découpée pour obtenir une électrode positive. L'électrode finie, la couche active présente une porosité de 30% et un grammage de 16g/dm².

### EXEMPLE 2

Une première électrode comparative (A1) est réalisée avec une couche active de composition pondérale :

| | |
|---|---|
| Matière électrochimiquement active à base de Ni(OH)₂ | 88,2% |
| Matériau conducteur : poudre de Co(OH)₂ | 10% |
| Liant : polytétrafluoroéthylène (PTFE) | 1%. |
| Composé cellulosique : CMC | 0,3% |
| Y₂O₃ | 0,5% |

La matière électrochimiquement active pulvérulente est constituée d'un hydroxyde à base de nickel contenant les additifs suivant : cobalt et zinc. La viscosité de la pâte est ajustée avec de l'eau. La pâte est introduite dans un support tridimensionnel qui est une mousse de nickel de porosité d'environ 95%. L'ensemble est ensuite séché afin d'en éliminer l'eau, puis laminé à l'épaisseur désirée et découpée pour obtenir une électrode positive. L'électrode finie, la couche active présente une porosité de 30% et un grammage de 16g/dm².

### EXEMPLE 3

Une électrode (II) selon l'invention est réalisée de la manière décrite dans l'exemple 1 avec une couche active de composition pondérale suivante :

| | |
|---|---|
| Matière électrochimiquement active à base de Ni(OH)₂ | 86,9% |
| Matériau conducteur : poudre de Co(OH)₂ | 10% |
| Copolymère styrène-acrylate | 2% |
| Composé cellulosique : CMC | 0,3% |
| Fibres de polypropylène de polypropylène | 0,3% |
| Y₂O₃ | 0,5% |

La matière électrochimiquement active pulvérulente est constituée d'un hydroxyde à base de nickel contenant les additifs suivant : cobalt et zinc. L'électrode finie, la couche active présente une porosité de 30% et un grammage de 16g/dm².

### EXEMPLE 4

Une deuxième électrode comparative (A2) est réalisée de la manière décrite dans l'exemple 2 avec une couche ayant la composition pondérale suivante :

| | |
|---|---|
| Matière électrochimiquement active à base de Ni(OH)₂ | 79,9% |
| Matériau conducteur : poudre de Co(OH)₂ | 10% |
| Liant : polytétrafluoroéthylène (PTFE) | 1% |
| Composé cellulosique : CMC | 0,3% |
| Fibres de polypropylène | 0,3% |
| Y₂O₃ | 0,5% |

La matière électrochimiquement active pulvérulente est constituée d'un hydroxyde à base de nickel contenant les additifs suivant : cobalt et zinc. L'électrode finie, la couche active présente une porosité de 30% et un grammage de 16g/dm².

### EXEMPLE 5

Une électrode (III) selon l'invention est réalisée de la manière décrite dans l'exemple 1 avec une couche active de composition pondérale suivante :

| | |
|---|---|
| Matière électrochimiquement active à base de Ni(OH)₂ | 86,3% |
| Matériau conducteur : poudre de Co(OH)₂ | 10% |
| Copolymère styrène-acrylate | 2,9% |
| Composé cellulosique : CMC | 0,3% |
| Y₂O₃ | 0,5% |

La matière électrochimiquement active pulvérulente est constituée d'un hydroxyde à base de nickel contenant les additifs suivant : cobalt et zinc. L'électrode finie, la couche active présente une porosité de 30% et un grammage de 16g/dm².

### EXEMPLE 6

Une électrode (IV) selon l'invention est réalisée de la manière décrite dans l'exemple 1 avec une couche active de composition pondérale suivante :

| | |
|---|---|
| Matière électrochimique active à base de Ni(OH)₂ | 84,9% |
| Matériau conducteur : poudre de Co(OH)₂ | 10% |
| Copolymère styrène-acrylate | 4% |
| Composé cellulosique : CMC | 0,3% |
| Fibres de polypropylène | 0,3% |
| Y₂O₃ | 0,5% |

La matière électrochimiquement active pulvérulente est constituée d'un hydroxyde à base de nickel contenant les additifs suivant : cobalt et zinc. L'électrode finie, la couche active présente une porosité de 30% et un grammage de 16g/dm².

### EXEMPLE 7

Une électrode (V) selon l'invention est réalisée de la manière décrite dans l'exemple 1 avec une couche active de composition pondérale suivante :

| | |
|---|---|
| Matière électrochimiquement active à base de Ni(OH)₂ | 88,75% |
| Matériau conducteur : poudre de Co(OH)₂ | 10% |
| Copolymère styrène-acrylate | 0,15% |
| Composé cellulosique : CMC | 0,3% |
| Fibres de polypropylène | 0,3% |
| Y₂O₃ | 0,5% |

La matière électrochimiquement active pulvérulente est constituée d'un hydroxyde à base de nickel contenant les additifs suivant : cobalt et zinc. L'électrode finie, la couche active présente une porosité de 30% et un grammage de 16g/dm².

On assemble des accumulateurs Ni-MH comportant respectivement les électrodes A1, A2 et I à V précédemment fabriquées. L'électrode négative de type connu, possède comme matière électrochimiquement active un composé intermétallique capable de formé un hydrure une fois chargé. Sa capacité est supérieure à celle de l'électrode positive. Chaque électrode positive est accolée à une électrode négative dont elle est isolée par un séparateur constitué d'un non-tissé de polypropylène pour former le faisceau électrochimique. Le faisceau ainsi spiralé est inséré dans un godet métallique et imprégné d'un électrolyte alcalin qui est une solution alcaline aqueuse constituée d'un mélange d'hydroxyde de potassium KOH 7,5N, d'hydroxyde de sodium NaOH 0,4N et d'hydroxyde de lithium LiOH 0,5N.

Après un repos de 48H à température ambiante, une formation électrique des accumulateurs est effectuée dans les conditions suivantes.

| | |
|---|---|
| Cycle 1 | repos 2h 85°C ; |
| | charge à 0.1lc pendant 4h à 85°C, où lc est le courrant nécessaire pour décharger la capacité nominale C du générateur en 1h ; |
| | repos 2h à 20°C ; |
| | charge 3h 0.33lc ; |
| | décharge à 0.2lc jusqu'à une tension de 0.9V ; |
| | charge 40minutes à IC, puis 1h30 à 0.5lc ; |
| | décharge à 0.2lc jusqu'à une tension de 0.9V. |
| Cycles 2 à 10 | charge 16h 0.1lc ; |
| | décharge à 0.2lc jusqu'à une tension de 0.9V. |
| Cycle 11 | charge 72 minutes lc ; |
| | décharge à lc jusqu'à une tension de 0.9V. |

Les capacités massiques au cycle 11, rapportées à la masse de matière enduite sont rassemblées dans le tableau 1 ci-dessous.

Puis un test de tenue mécanique des électrodes A1, A2, et I à V est réalisé de la façon suivante : chaque électrode est pesée, puis lâchée d'une hauteur de 50cm sur une surface plane. La chute est répétée 10 fois. Puis l'électrode est pesée de nouveau. Le résultat du test est exprimé comme le ratio de la masse initiale moins la masse finale rapportée à la masse initiale. Une électrode sera d'autant plus solide que ce ratio sera faible. Les résultats obtenus sont rassemblés dans le tableau 1 ci-dessous.

Les deux électrodes comparatives A1 et A2 à support tridimensionnel ne diffèrent que par la présence de fibres polymères dans la couche active, dont le rôle est de renforcer la tenue mécanique de l'électrode. Les deux électrodes ont le même comportement en test de tenue mécanique. On observe que la capacité massique est identique pour les deux électrodes comparatives A1 et A2 : la présence de 0,3% en poids de fibres dans la couche active n'a pas d'influence sur les performances électrochimiques du générateur.

De même les électrodes I et II selon la présente invention à support bidimensionnel ne diffèrent que par la présence de fibres polymères da ns la couche active. La capacité obtenu au cycle 11 est du même ordre pour les deux électrodes I et II, mais on voit que l'électrode II a une meilleure tenue mécanique que l'électrode I. La présence de 0,3% en poids de fibres dans la couche n'a pas d'influence sur les performances électrochimiques du générateur.

L'évaluation électrochimique des générateurs assemblés avec des électrodes selon l'invention montre que les électrodes I et II, comprenant un support conducteur bidimensionnel et un liant selon l'invention, présentent une capacité massique au moins égale à celle des électrodes A1 et A2 à support tridimensionnel.

Pour une proportion plus importante de copolymère styrène-acrylate (électrode III) la capacité de l'électrode diminue légèrement. Cependant l'augmentation de la proportion de liant a permis d'améliorer la tenue mécanique de l'électrode malgré l'absence de fibres.

Si on augmente encore la proportion de copolymère styrène-acrylate (électrode IV) la capacité massique de l'électrode chute à cause de la diminution de la quantité de matière active.

L'électrode V comprenant une proportion de copolymère styrène-acrylate plus faible présente une bonne capacité massique, mais sa tenue mécanique dégradée la rend plus difficilement utilisable.

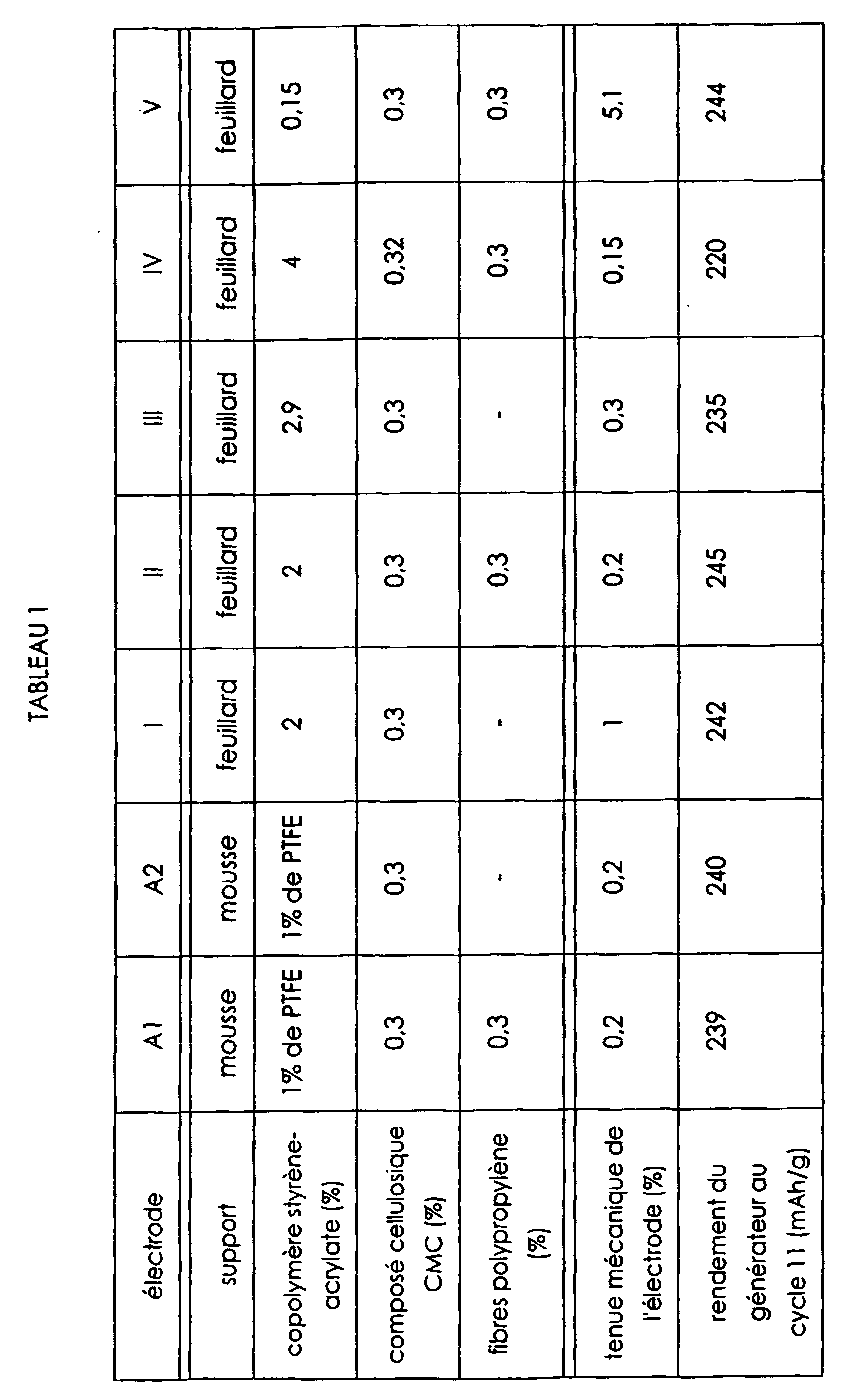

## Revendications

1. Générateur électrochimique secondaire à électrolyte alcalin comprenant une électrode non-frittée comportant un support conducteur bidimensionnel recouvert d'une couche contenant une matière électrochimiquement active et un liant, **caractérisé en ce que** ledit liant est un mélange d'un composé cellulosique et d'un copolymère styrène-acrylate de formule générale :
[(-CH₂-CHC₆H₅-)ₚ (-CH₂CHCOOR-)_{q}]ₓ.

2. Générateur selon la revendication 1, dans lequel la proportion dudit copolymère styrène-acrylate est inférieur à 4% en poids de ladite couche.

3. Générateur selon la revendication 2, dans lequel la proportion dudit copolymère styrène-acrylate est comprise entre 0,15% et 3% en poids de ladite couche.

4. Générateur selon l'une des revendications précédentes, dans lequel ledit composé cellullosique est choisi parmi la méthylcellulose, la carboxyméthylcellulose, l'hydroxypropylméthylcellulose, l'hydroxypropylcellulose et l'hydroxyéthylcellulose.

5. Générateur selon l'une des revendications précédentes, dans lequel la proportion dudit composé cellulosique est comprise entre 0.1 et 1% en poids de ladite couche.

6. Générateur selon l'une des revendications précédentes, dans lequel ladite matière électrochimiquement active comprend un hydroxyde de nickel.

7. Générateur selon la revendication 6, dans lequel ledit hydroxyde de nickel contient en outre au moins un hydroxyde syncristallisé d'un élément choisi parmi le zinc, le cadmium et le magnésium et au moins un hydroxyde syncristallisé d'un élément choisi parmi le cobalt, le manganèse, l'aluminium, l'yttrium, le calcium, le strontium, le zirconium, le cuivre.

8. Générateur selon l'une des revendications 6 et 7, dans lequel ledit hydroxyde de nickel est de forme sphéroïdale et présente une granulométrie comprise entre 7 et 20 microns.

9. Générateur selon l'une des revendications précédentes, dans lequel ladite couche comprend en outre un matériau conducteur constitué principalement d'un composé du cobalt.

10. Générateur selon la revendication 9, dans lequel ledit composé du cobalt est choisi parmi le cobalt métal Co, l'oxyde de cobalt CoO, l'hydroxyde de cobalt Co(OH)₂, l'oxyde mixte de lithium et de cobalt LiCoO₂ et un oxyde de cobalt conducteur de valence supérieure à 2.

11. Générateur selon l'une des revendications précédentes, dans lequel ladite couche contient en outre au moins un autre composé choisi parmi les composés du zinc, de l'yttrium, de l'ytterbium et du calcium.

12. Générateur selon la revendication 11, dans lequel ledit composé est un composé de l'yttrium.

13. Générateur selon la revendication 12, dans lequel ledit composé de l'yttrium est choisi parmi l'oxyde d'yttrium Y₂O₃ et l'hydroxyde d'yttrium Y(OH)₃.

14. Générateur selon la revendication 11, dans lequel ledit composé est un composé de l'ytterbium.

15. Générateur selon la revendication 14, dans lequel ledit composé de l'ytterbium est choisi parmi l'oxyde d'ytterbium Yb₂O₃ et l'hydroxyde d'ytterbium Yb(OH)₃.

16. Générateur selon l'une des revendications précédentes, dans lequel ladite couche contient en outre des fibres polymères.

17. Générateur selon l'une des revendications précédentes, dans lequel ledit support conducteur bidimensionnel est choisi parmi un feuillard plein ou perforé, un métal déployé, une grille et un tissu.

18. Générateur selon l'une des revendications précédentes, comportant en outre une électrode négative à hydrure métallique.

## Patentansprüche

1. Elektrochemischer sekundärer Generator mit alkalischem Elektrolyten, aufweisend eine ungesinterte Elektrode mit einem leitfähigen zweidimensionalen Träger, der von einer Schicht bedeckt ist, die ein elektrochemisch aktives Material und ein Bindemittel enthält, **dadurch gekennzeichnet, dass** das Bindemittel ein Gemisch aus einer Zellulose-Verbindung und einem Styrol-Acrylat-Copolymer der allgemeinen Formel
[(-CH₂-CHC₆H₅-)ₚ (-CH₂CHCOOR-)_{q}]ₓ.
ist.

2. Generator nach Anspruch 1, bei dem der Anteil des Styrol-Acrylat-Copolymers unter 4 Gew.% der Schicht ausmacht.

3. Generator nach Anspruch 2, bei dem der Anteil des Styrol-Acrylat-Copolymers zwischen 0,15 Gew.% und 3 Gew.% der Schicht liegt.

4. Generator nach einem der vorangehenden Ansprüche, bei dem die Zellulose-Verbindung ausgewählt ist unter Methylzellulose, Carboxymethylzellulose, Hydroxypropylmethylzellulose, Hydroxypropylzellulose und Hydroxyethylzellulose.

5. Generator nach einem der vorangehenden Ansprüche, bei dem der Anteil der Zellulose-Verbindung zwischen 0,1 und 1 Gew.% der Schicht liegt.

6. Generator nach einem der vorangehenden Ansprüche, bei dem das elektrochemisch aktive Material ein Nickelhydroxid aufweist.

7. Generator nach Anspruch 6, bei dem das Nickelhydroxid außerdem mindestens ein co-kristallisiertes Hydroxid eines Elements, das ausgewählt ist aus Zink, Cadmium und Magnesium, und mindestens ein co-kristallisiertes Hydroxid eines Elements, das ausgewählt ist aus Cobalt, Mangan, Alluminium, Yttrium, Calcium, Strontium, Zirkonium, Kupfer, enthält.

8. Generator nach einem der Ansprüche 6 und 7, bei dem das Nickelhydroxid von kugelförmiger Gestalt ist und eine Kornklassierung zwischen 7 und 20 µm zeigt.

9. Generator nach einem der vorangehenden Ansprüche, bei dem die Schicht außerdem ein leitfähiges Material, das hauptsächlich aus einer Cobalt-Verbindung besteht, aufweist.

10. Generator nach Anspruch 9, bei dem die Cobalt-Verbindung ausgewählt ist aus Cobaltmetall Co, Cobaltoxid CoO, Cobalthydroxid Co(OH)₂, Lithium- und Cobaltmischoxid LiCoO₂ und einem leitfähigen Cobaltoxid einer Wertigkeit oberhalb 2.

11. Generator nach einem der vorangehenden Ansprüche, bei dem die Schicht außerdem mindestens eine andere Verbindung enthält, die ausgewählt ist aus den Verbindungen des Zinks, des Yttriums, des Ytterbiums und des Calciums.

12. Generator nach Anspruch 11, bei dem die Verbindung eine Yttrium-Verbindung ist.

13. Generator nach Anspruch 12, bei dem die Yttrium-Verbindung ausgewählt ist aus Yttriumoxid Y₂O₃ und Yttriumhydroxid Y(OH)₃.

14. Generator nach Anspruch 11, bei dem die Verbindung eine Ytterbium-Verbindung ist.

15. Generator nach Anspruch 14, bei dem die Ytterbium-Verbindung ausgewählt ist aus Ytterbiumoxid Yb₂O₃ und Ytterbiumhydroxid Yb(OH)₃.

16. Generator nach einem der vorangehenden Ansprüche, bei dem die Schicht außerdem Polymerfasern enthält.

17. Generator nach einem der vorangehenden Ansprüche, bei dem der leitfähige zweidimensionale Träger ausgewählt ist aus massivem oder gelochtem Bandmaterial, einem Streckmetall, einem Gitter und einem Gewebe.

18. Generator nach einem der vorangehenden Ansprüche, außerdem eine Kathode mit Metallhydrid aufweisend.

## Claims

1. A secondary electrochemical cell with an alkaline electrolyte, the cell containing a non-sintered electrode comprising a two-dimensional conductive support covered in a layer containing an electrochemically active material and a binder, **characterized in that** said binder is a mixture of a cellulose compound and a styrene-acrylate copolymer of general formula:
[(-CH₂-CHC₆H₅-)ₚ (-CH₂CHCOOR-)_{q}]ₓ.

2. A cell according to claim 1, in which the proportion of said styrene-acrylate copolymer is less than 4% by weight of said layer.

3. A cell according to claim 2, in which the proportion of said styrene-acrylate copolymer lies in the range 0.15% to 3% by weight of said layer.

4. A cell according to one of the preceding claims, in which said cellulose compound is selected from methylcellulose, carboxymethylcellulose, hydroxypropylmethyl-cellulose, hydroxypropylcellulose, and hydroxyethylcellulose.

5. A cell according to one of the preceding claims, in which the proportion of said cellulose compound lies in the range 0.1% to 1% by weight of said layer.

6. A cell according to one of the preceding claims, in which said electrochemically active material comprises a nickel hydroxide.

7. A cell according to claim 6, in which said nickel hydroxide also contains at least one syncrystallized hydroxide of an element selected from zinc, cadmium, and magnesium, and at least one syncrystallized hydroxide of an element selected from cobalt, manganese, aluminum, yttrium, calcium, strontium, zirconium, copper.

8. A cell according to claim 6 or 7, in which said nickel hydroxide has a spheroidal shape and has a grain size lying in the range 7 µm to 20 µm.

9. A cell according to one of the preceding claims, in which said layer also comprises a conductive material consisting principally of a compound of cobalt.

10. A cell according to claim 9, in which said compound of cobalt is selected from cobalt metal Co, cobalt oxide CoO, cobalt hydroxide Co(OH)₂, the composite oxide of lithium and cobalt LiCoO₂, and an oxide of conductive cobalt oxide of a valency greater than 2.

11. A cell according to one of the preceding claims, in which said layer also contains at least one other compound selected from the compounds of zinc, yttrium, ytterbium, and calcium.

12. A cell according to claim 11, in which said compound is a compound of yttrium.

13. A cell according to claim 12, in which said compound of yttrium is selected from yttrium oxide Y₂O₃ and yttrium hydroxide Y(OH)₃.

14. A cell according to claim 11, in which said compound is a compound of ytterbium.

15. A cell according to claim 14, in which said compound of ytterbium is selected from ytterbium oxide Yb₂O₃ and ytterbium hydroxide Yb(OH)₃.

16. A cell according to one of the preceding claims, in which said layer also contains polymer fibers.

17. A cell according to one of the preceding claims, in which said two-dimensional conductive support is selected from a solid or a perforated strip, an expanded metal, a grid, and a fabric.

18. A cell according to one of the preceding claims, also comprising a metal-hydride negative electrode.
